# EUROPÄISCHE PATENTSCHRIFT

(11) **EP 3 706 570 B1**
(45) Veröffentlichungstag und Bekanntmachung des Hinweises auf die Patenterteilung: **25.05.2022**
(21) Anmeldenummer: 18803570.3
(22) Anmeldetag: 02.11.2018
(51) Int. Cl.: B05B 1/20, B05B 7/32, A01M 7/00

(54) **WIRKSTOFFVERSORGUNGSSYSTEM FÜR EIN LANDWIRTSCHAFTLICHES SPRITZGERÄT**
SYSTEM FOR THE SUPPLY OF AN ACTIVE SUBSTANCE FOR AN AGRICULTURAL SPRAYER
SYSTÈME D'ALIMENTATION D'UNE SUBSTANCE ACTIVE POUR UN PULVÉRISATEUR AGRICOLE

(30) Priorität: 10.11.2017 DE 102017126350
(43) Veröffentlichungstag der Anmeldung: 16.09.2020
(73) Patentinhaber: Amazonen-Werke H. Dreyer SE & Co. KG, 49205 Hasbergen (DE)
(72) Erfinder: KLEMANN, Timo, 49191 Belm (DE); KÜHN, Christoph, 49186 Bad Iburg (DE); DEMBECK, Achim, 49134 Wallenhorst (DE); FELDHAUS, Johannes, 23253 Åkarp (SE); KALKMANN, Helmke, 49076 Osnabrück (DE); STIEGEMEYER, Mathias, 49504 Lotte (DE); AUSTERMANN, Stefan, 48291 Telgte (DE)
(74) Vertreter: Grünecker Patent- und Rechtsanwälte PartG mbB
(86) Internationale Anmeldenummer: PCT/EP2018/079976
(87) Internationale Veröffentlichungsnummer: WO 2019/091858

(56) Entgegenhaltungen:
- EP-A1- 1 932 423
- WO-A2-2005/048704
- DD-A5- 298 722
- DE-T5-112014 002 765
- FR-A1- 2 835 449

## Beschreibung

Die Erfindung betrifft ein Wirkstoffversorgungssystem für ein landwirtschaftliches Spritzgerät nach dem Oberbegriff des Patentanspruchs 1 und wie bekannt aus DE 11 2014 002765 T5, ein landwirtschaftliches Spritzgerät nach dem Oberbegriff des Patentanspruchs 11 und ein Verfahren zum Ausbringen einer Spritzflüssigkeit nach dem Oberbegriff des Patentanspruchs 12.

Zur Ausbringung von Spritzflüssigkeit auf landwirtschaftliche Nutzflächen sind landwirtschaftliche Spritzgeräte bekannt, welche mit einem sogenannten Direkteinspeisesystem arbeiten, mittels welchem Wirkstoffe partiell ausgebracht werden können. Entsprechende Direkteinspeisesysteme erlauben ein Hinzudosieren von Wirkstoff zu einer Hauptflüssigkeit während des Ausbringvorgangs, sodass die Notwendigkeit der Bevorratung großer Mengen einer flüssigen Wirkstoffmischung aus der Hauptflüssigkeit und dem Wirkstoff nicht notwendig ist. Direkteinspeisesysteme erlauben außerdem die Anpassung der Wirkstoffmenge und somit die Anpassung des Mischungsverhältnisses der auszubringenden Spritzflüssigkeit während des Ausbringvorgangs.

Gattungsgemäße Wirkstoffversorgungssysteme arbeiten regelmäßig mit einem Hauptflüssigkeitskreislauf, welcher einen Vorratsbehälter für die Hauptflüssigkeit umfasst und eine Zirkulation der Hauptflüssigkeit erlaubt. Dabei weist der Hauptflüssigkeitskreislauf üblicherweise einen oder mehrere Verteilabschnitte auf, welche jeweils dazu eingerichtet sind, eine auszubringende Spritzflüssigkeit auf mehrere Ausbringelemente, wie etwa Spritzdüsen, zu verteilen.

Ein Wirkstoffversorgungssystem, welches nach dem Prinzip der Direkteinspeisung arbeitet, ist beispielsweise aus der Druckschrift DE 10 2004 047 585 A1 bekannt. Die Druckschrift schlägt die Verwendung eines Vormischbehälters vor, in welchem eine Vorverdünnung der Wirkstoffe mit der Hauptflüssigkeit erfolgt. Die vorverdünnte Wirkstoffmischung wird dann dem Gestänge zugeleitet und nochmals mit der Hauptflüssigkeit zu der auszubringenden Spritzbrühe vermischt. Außerdem beschreibt die Druckschrift DE 10 2006 059 193 A1 ein System zur Direkteinspeisung von Wirkstoffen in eine dem Gestänge bereits zugeleitete Hauptflüssigkeit. Die Wirkstoffe werden vorverdünnt und anschließend in einer Mischkammer mit der Trägerflüssigkeit bis zur gewünschten Konzentration verdünnt.

Die Druckschrift DE 10 2006 045 450 A1 beschreibt ferner, dass die Zirkulation von Flüssigkeit innerhalb des Gestänges zur schnelleren Verteilung des Wirkstoffes über das Gestänge dienen kann.

Hinsichtlich der Direkteinspeisung besteht jedoch nach wie vor das Problem, dass sich eine sogenannte Latzenzzeit ergibt, bis der eingespeiste Wirkstoff bzw. die gewünschte flüssige Wirkstoffmischung an sämtlichen Ausbringelementen anliegt. Aufgrund des längeren Strömungsweges liegt die flüssige Wirkstoffmischung zuerst an den Ausbringelementen an, welche den geringsten Abstand zu der Einspeisestelle aufweisen. Mit zunehmendem Abstand eines Ausbringelements von der Einspeisestelle vergrößert sich die Verzögerung, bis die gewünschte Wirkstoffmischung an dem jeweiligen Ausbringelement anliegt.

Aufgabe der vorliegenden Erfindung ist es somit, die Latzenzzeit von Wirkstoffversorgungssystemen, welche über eine Direkteinspeisung verfügen, zu verringern, sodass hinzudosierter Wirkstoff schneller an den Ausbringelementen ansteht.

Die Aufgabe wird gelöst durch ein Wirkstoffversorgungssystem der eingangs genannten Art, wobei das erfindungsgemäße Wirkstoffversorgungssystem dazu eingerichtet ist, die Wirkstoffmischung an mehreren Stellen in den einen oder die mehreren Verteilabschnitte einzuleiten.

Die Erfindung macht sich die Erkenntnis zunutze, dass durch eine Einleitung der Wirkstoffmischung an mehreren Stellen in den einen oder die mehreren Verteilabschnitte die Strömungswege für die Wirkstoffmischung, beispielsweise zu außen liegenden Ausbringelementen, erheblich verkürzt werden. Durch diese Verkürzung der Strömungswege steht die Wirkstoffmischung bereits nach kürzerer Zeit an sämtlichen Ausbringelementen an, sodass die Latenzzeit erheblich verringert wird.

Die Verteilabschnitte können beispielsweise die Teilbreiten eines Spritzgeräts sein, welche jeweils eine Gruppe von Ausbringelementen umfassen. Die Ausbringelemente können beispielsweise als Spritzdüsen ausgebildet sein oder Spritzdüsen umfassen. Die auszubringende Spritzflüssigkeit kann entweder die Hauptflüssigkeit, die flüssige Wirkstoffmischung oder eine Mischflüssigkeit sein, welche durch erneutes Vermischen der Hauptflüssigkeit und der flüssigen Wirkstoffmischung erzeugt wird. Ferner kann das Wirkstoffversorgungssystem dazu eingerichtet sein, die Hauptflüssigkeit an mehreren Stellen in den einen oder die mehreren Verteilabschnitte einzuleiten. Dabei kann die Hauptflüssigkeit an den gleichen Stellen wie die Wirkstoffmischung in den einen oder die mehreren Verteilabschnitte eingeleitet werden. Alternativ oder zusätzlich kann die Hauptflüssigkeit an anderen Stellen als die Wirkstoffmischung in den einen oder die mehreren Verteilabschnitte eingeleitet werden.

In einer besonders bevorzugten Ausführungsform des erfindungsgemäßen Wirkstoffversorgungssystems weist dieses mehrere Durchflusssteuereinheiten auf, welche jeweils mit dem Hauptflüssigkeitskreislauf und dem Einspeisesystem verbunden und dazu eingerichtet sind, den Durchfluss der Hauptflüssigkeit und der Wirkstoffmischung zu einem Verteilabschnitt zu steuern. Die Durchflusssteuereinheiten sind vorzugsweise Umschalteinheiten, insbesondere Stellventile, welche entweder den Durchfluss der Hauptflüssigkeit oder alternativ den Durchfluss der Wirkstoffmischung zu einem Verteilabschnitt freigeben. Insbesondere sind die Durchflusssteuereinheiten Drei-Wege-Kugelhähne.

In einer Weiterbildung des erfindungsgemäßen Wirkstoffversorgungssystems weist der Hauptflüssigkeitskreislauf in Durchflussrichtung hinter dem einen oder den mehreren Verteilabschnitten eine oder mehrere Rückflussleitungen auf, welche mit dem Vorratsbehälter verbunden sind, wobei an der einen oder den mehreren Rückflussleitungen jeweils eine Absperreinrichtung angeordnet ist, welche dazu eingerichtet ist, den Durchfluss zu sperren. Durch ein Sperren des Durchflusses in Richtung des Vorratsbehälters kann verhindert werden, dass die flüssige Wirkstoffmischung zurück in den Vorratsbehälter gefördert wird und sich innerhalb des Vorratsbehälters mit der Hauptflüssigkeit vermischt. Würde eine derartige Vermischung stattfinden, wäre eine präzise Anpassung der Wirkstoffmischung durch Variieren der hinzudosierten Wirkstoffmenge nicht länger möglich. Der eine oder die mehreren Absperreinrichtungen können beispielsweise als Zwei-Wege-Kugelhähne ausgebildet sein. Zwischen den Rückflussleitungen und dem Vorratsbehälter ist vorzugsweise eine Sammelleitung angeordnet, sodass lediglich eine Leitung zu dem Vorratsbehälter zurückzuführen ist.

Beim erfindungsgemäßen Wirkstoffversorgungssystem ist an dem Hauptflüssigkeitskreislauf eine Abzweigung vorhanden, welche den Hauptflüssigkeitskreislauf fluidleitend mit einer Mischkammer des Einspeisesystems verbindet.

Die Mischkammer des Einspeisesystems ist vorzugsweise mit einer Dosiereinrichtung für den Wirkstoff verbunden. Vorzugsweise weist die Dosiereinrichtung für den Wirkstoff eine Dosierpumpe auf. In der Mischkammer erfolgt die Vermischung der Hauptflüssigkeit mit dem Wirkstoff zu der flüssigen Wirkstoffmischung. Das Wirkstoffversorgungssystem weist vorzugsweise jeweils eine Durchflussmesseinrichtung zwischen der Abzweigung und der Mischkammer, im Hauptflüssigkeitskreislauf zwischen der Abzweigung und dem einen oder den mehreren Verteilabschnitten und/oder im Hauptflüssigkeitskreislauf zwischen der einen oder den mehreren Rückflussleitungen und dem Vorratsbehälter auf. Mittels der Durchflussmesseinrichtungen kann die zu den Ausbringelementen geförderte Flüssigkeitsmenge und die in den Vorratsbehälter zurückgeförderte Flüssigkeitsmenge ermittelt werden, sodass eine Bestimmung der momentanen Ausbringmenge erfolgen kann.

In einer weiteren Ausführungsform des erfindungsgemäßen Wirkstoffversorgungssystems weist die Abzweigung eine Durchflusssteuereinheit auf, welche dazu eingerichtet ist, den Durchfluss der in dem Hauptflüssigkeitskreislauf zirkulierenden Hauptflüssigkeit und/oder den Abfluss der in dem Hauptflüssigkeitskreislauf zirkulierenden Hauptflüssigkeit zu der Mischkammer zu steuern. Die Durchflusssteuereinheit kann derart ausgebildet sein, dass das Verhältnis aus dem Durchfluss der in dem Hauptflüssigkeitskreislauf zirkulierenden Hauptflüssigkeit und dem Abfluss der in dem Hauptflüssigkeitskreislauf zirkulierenden Hauptflüssigkeit zu der

Mischkammer einstellbar ist. Die Durchflusssteuereinheit kann ebenso als Umschalteinheit, insbesondere ein Stellventil, ausgebildet sein, welche entweder die Zirkulation der Hauptflüssigkeit im Hauptflüssigkeitskreislauf erlaubt oder alternativ die Hauptflüssigkeit aus dem Hauptflüssigkeitskreislauf zu der Mischkammer umleitet. Die Durchflusssteuereinheit ist vorzugsweise ein Drei-Wege-Kugelhahn. Vorzugsweise weist das Wirkstoffversorgungssystem eine Durchflussmesseinrichtung zwischen einer Fördereinrichtung des Hauptflüssigkeitskreislaufs und der Durchflusssteuereinheit der Abzweigung auf. Über einen Vergleich der Durchflussmenge zu den Ausbringelementen mit der Rückflussmenge in den Vorratsbehälter kann die aktuelle Ausbringmenge ermittelt werden.

In einer Weiterbildung des erfindungsgemäßen Wirkstoffversorgungssystems weist dieses mehrere Durchflusssteuereinheiten auf, deren Einlässe jeweils mit dem Hauptflüssigkeitskreislauf und vorzugsweise nicht mit dem Einspeisesystem verbunden sind und welche jeweils dazu eingerichtet sind, den Durchfluss der Hauptflüssigkeit zu einem Verteilabschnitt zu steuern. Die Durchflusssteuereinheiten sind vorzugsweise als Ventileinheiten, insbesondere als Rückschlagventile, ausgebildet.

In einer anderen Ausführungsform des erfindungsgemäßen Wirkstoffversorgungssystems weist dieses mehrere Durchflusssteuereinheiten auf, deren Einlässe jeweils mit dem Einspeisesystem und vorzugsweise nicht mit dem Hauptflüssigkeitskreislauf verbunden sind und welche jeweils dazu eingerichtet sind, den Durchfluss der Wirkstoffmischung zu einem Verteilabschnitt zu steuern. Die Durchflusssteuereinheiten sind vorzugsweise als Ventileinheiten, insbesondere als Rückschlagventile, ausgebildet.

Darüber hinaus ist ein erfindungsgemäßes Wirkstoffversorgungssystem bevorzugt, welches einen Umwälzkreislauf für die Wirkstoffmischung aufweist, welcher eine Zirkulation der Wirkstoffmischung erlaubt. Durch den Umwälzkreislauf für die Wirkstoffmischung steht an den Durchflusssteuereinheiten, welche jeweils mit dem Einspeisesystem verbunden sind, eine Wirkstoffmischung mit dem gewünschten Mischungsverhältnis an. Die Umwälzung innerhalb des Umwälzkreislaufs dient zunächst dem Erzeugen einer homogenen Wirkstoffmischung aus der Hauptflüssigkeit und dem Wirkstoff. Sobald die homogene Wirkstoffmischung erzeugt ist, beugt die Umwälzung der Wirkstoffmischung innerhalb des Umwälzkreislaufs einem Entmischen und einem Absetzen der Wirkstoffe vor.

In einer anderen Ausführungsform des erfindungsgemäßen Wirkstoffversorgungssystems ist der Umwälzkreislauf gegenüber dem Vorratsbehälter und/oder dem einen oder den mehreren Verteilabschnitten absperrbar. Durch die Absperrung des Umwälzkreislaufs gegenüber dem Vorratsbehälter wird verhindert, dass die Wirkstoffmischung in den Vorratsbehälter gelangt und sich mit der Hauptflüssigkeit vermischt. Dadurch, dass der Umwälzkreislauf gegenüber dem einen oder den mehreren Verteilabschnitten absperrbar ist, kann die Ausbringung der Wirkstoffmischung ohne Schaltung der Ausbringelemente unterbrochen werden. Außerdem erlaubt die Absperrung des Umwälzkreislaufs gegenüber dem einen oder den mehreren Verteilabschnitten weiterhin die Ausbringung reiner Hauptflüssigkeit, währenddessen innerhalb des Umwälzkreislaufs weiterhin eine Wirkstoffmischung zirkuliert.

In einer vorteilhaften Weiterbildung des erfindungsgemäßen Wirkstoffversorgungssystems sind der Umwälzkreislauf und der Hauptflüssigkeitskreislauf vollständig voneinander trennbar. Vorzugsweise weisen der Umwälzkreislauf und der Hauptflüssigkeitskreislauf jeweils zumindest eine eigene Fördereinrichtung, insbesondere Pumpe, auf, sodass die Zirkulation innerhalb des Umwälzkreislaufs nicht von der Zirkulation innerhalb des Hauptflüssigkeitskreislaufs abhängt. Alternativ können der Umwälzkreislauf und der Hauptflüssigkeitskreislauf miteinander gekoppelt sein, beispielsweise derart, dass der Umwälzkreislauf und der Hauptflüssigkeitskreislauf gemeinsame Leitungsabschnitte aufweisen. Durch eine geeignete Schaltung von Sperreinrichtungen kann in diesem Fall entweder eine Zirkulation innerhalb des Umwälzkreislaufs oder eine Zirkulation innerhalb des Hauptflüssigkeitskreislaufs realisiert werden.

Außerdem ist ein erfindungsgemäßes Wirkstoffversorgungssystem vorteilhaft, bei welchem der Umwälzkreislauf eine Fördereinrichtung und eine die Fördereinrichtung überbrückende Bypassleitung aufweist. Der Bypassleitungseinlass ist in Durchflussrichtung hinter der Fördereinrichtung angeordnet und der Bypassleitungsauslass ist in Durchflussrichtung vor der Fördereinrichtung angeordnet. Die Bypassleitung dient vorzugsweise der Reinigung und/oder der Entleerung des Umwälzkreislaufs.

Die der Erfindung zugrunde liegende Aufgabe wird ferner durch ein landwirtschaftliches Spritzgerät der eingangs genannten Art gelöst, wobei das Wirkstoffversorgungssystem des erfindungsgemäßen landwirtschaftlichen Spritzgeräts nach einer der vorstehend beschriebenen Ausführungsformen ausgebildet ist. Hinsichtlich der Vorteile und Modifikationen des erfindungsgemäßen landwirtschaftlichen Spritzgeräts wird auf die Vorteile und Modifikationen des erfindungsgemäßen Wirkstoffversorgungssystems verwiesen.

Die der Erfindung zugrunde liegende Aufgabe wird ferner durch ein Verfahren zum Ausbringen einer Spritzflüssigkeit der eingangs genannten Art gelöst, wobei das erfindungsgemäße Verfahren das Einleiten der Wirkstoffmischung an mehreren Stellen in den einen oder die mehreren Verteilabschnitte umfasst. Hinsichtlich der Vorteile und Modifikationen des erfindungsgemäßen Verfahrens wird zunächst auf die Vorteile und Modifikationen des erfindungsgemäßen Wirkstoffversorgungssystems verwiesen.

Vorzugsweise umfasst der Hauptflüssigkeitskreislauf zumindest einen Abschnitt des Verteilergestänges, eine Mehrzahl von Ausbringelementen und/oder zumindest einen Strömungserzeuger. Die Ausbringelemente können dabei als Spritzdüsen ausgebildet sein oder jeweils eine Spritzdüse umfassen.

In einer bevorzugten Ausführungsform des erfindungsgemäßen Verfahrens wird der Durchfluss der Hauptflüssigkeit und der Wirkstoffmischung zu einem Verteilabschnitt an den mehreren Stellen gesteuert. Die Steuerung des Durchflusses kann beispielsweise das Unterbrechen oder Freigeben des Durchflusses der Hauptflüssigkeit und/oder der Wirkstoffmischung umfassen. Ferner kann das Steuern des Durchflusses auch das Einstellen eines Volumen- oder Massenstroms der Hauptflüssigkeit und/oder der Wirkstoffmischung umfassen.

Außerdem ist ein erfindungsgemäßes Verfahren bevorzugt, bei welchem das Steuern des Durchflusses der Hauptflüssigkeit und der Wirkstoffmischung zu einem Verteilabschnitt an mehreren Stellen jeweils mit einer Umschalteinheit, insbesondere einem Stellventil, erfolgt, welche entweder den Durchfluss der Hauptflüssigkeit oder alternativ den Durchfluss der Wirkstoffmischung zu einem Verteilabschnitt freigibt. Auf diese Weise kann entweder Hauptflüssigkeit oder die Wirkstoffmischung in den einen oder die mehreren Verteilabschnitte eingeleitet werden.

In einer Weiterbildung des erfindungsgemäßen Verfahrens erfolgt das Steuern des Durchflusses der Hauptflüssigkeit und der Wirkstoffmischung zu einem Verteilabschnitt an den mehreren Stellen jeweils mit separaten Ventilen für die Hauptflüssigkeit und die flüssige Wirkstoffmischung. Durch die Verwendung von separaten Ventilen können den unterschiedlichen Verteilabschnitten auch verschiedene Mengen der Hauptflüssigkeit und/oder der Wirkstoffmischung zugeführt werden. Die Ausbringung kann auf diese Weise noch variabler erfolgen.

In einer besonders bevorzugten Ausführungsform des erfindungsgemäßen Verfahrens umfasst dieses das Sperren des Rückflusses des Hauptflüssigkeitskreislaufs von dem einen oder den mehreren Verteilabschnitten zu dem Vorratsbehälter und/oder das Freigeben des Rückflusses des Hauptflüssigkeitskreislaufs von dem einen oder den mehreren Verteilabschnitten zu dem Vorratsbehälter.

Ferner ist ein erfindungsgemäßes Verfahren bevorzugt, bei welchem die Wirkstoffmischung in einem Umwälzkreislauf zirkuliert. Die Zirkulation dient zunächst dem Erzeugen einer homogenen Wirkstoffmischung aus der Hauptflüssigkeit und dem Wirkstoff. Sobald die homogene Wirkstoffmischung erzeugt ist, beugt die Zirkulation der Wirkstoffmischung innerhalb des Umwälzkreislaufs einem Entmischen und einem Absetzen der Wirkstoffe vor.

In einer anderen Ausführungsform des erfindungsgemäßen Verfahrens wird ein Verteilabschnitt oder werden mehrere oder sämtliche Verteilabschnitte mit der Wirkstoffmischung vor einem Freigeben von deren Ausbringelementen vorgeladen. Das Vorladen erfolgt hierbei dadurch, dass die eine oder die mehreren Absperreinrichtungen an den Rückflussleitungen geöffnet bleiben und die Durchflusssteuereinheiten dem einen Verteilabschnitt oder den mehreren oder sämtlichen Verteilabschnitten Wirkstoffmischungen zuführen, bis an den Ausbringelementen des einen Verteilabschnitts oder der mehreren oder sämtlichen Verteilabschnitte die Wirkstoffmischung ansteht.

Darüber hinaus ist ein erfindungsgemäßes Verfahren bevorzugt, bei welchem der Umwälzkreislauf mit einer Wirkstoffmischung vor einem Freigeben des Durchflusses von dem Umwälzkreislauf zu einer oder mehreren Verteilabschnitten vorgeladen wird. Das Vorladen erfolgt hierbei dadurch, dass dem Umwälzkreislauf so lange Wirkstoff zugeführt wird, bis die gewünschte Wirkstoffmischung im Umwälzkreislauf erreicht ist, bevor der Durchfluss von dem Umwälzkreislauf zu einem oder mehreren Verteilabschnitten freigegeben wird.

In einer weiteren Ausführungsform des erfindungsgemäßen Verfahrens wird die auszubringende Spritzflüssigkeit von der Wirkstoffmischung auf reine Hauptflüssigkeit geändert, wobei zum Ändern der auszubringenden Spritzflüssigkeit von der Wirkstoffmischung auf reine Hauptflüssigkeit die eine oder die mehreren Absperreinrichtungen an den Rückflussleitungen so lange geschlossen bleiben, bis sämtliche Wirkstoffmischung die Leitungen des Hauptflüssigkeitskreislaufs verlassen hat.

In regelmäßigen oder unregelmäßigen Zeitintervallen kann außerdem Wirkstoffmischung ausgebracht werden, um ein Ablagern des Wirkstoffs zu verhindern. Ferner kann zur Verhinderung von Ablagerungen im Bereich des Einspeisesystems und/oder im Bereich des Umwälzkreislaufs Hauptflüssigkeit in das Einspeisesystem eingeleitet und/oder innerhalb des Umwälzkreislaufs zirkuliert werden, wenn für eine längere Zeit keine Wirkstoffmischung auszubringen ist. Außerdem kann der Umwälzkreislauf eine eigene Fördereinrichtung, insbesondere Pumpe, aufweisen, mittels welcher eine kontinuierliche Zirkulation umgesetzt werden kann, auch wenn keine Wirkstoffmischung zur Ausbringung aus dem Umwälzkreislauf entnommen wird. Ferner kann durch die Pumpe im Umwälzkreislauf der Umwälzkreislauf teilweise oder vollständig entleert werden. Für die vollständige Entleerung des Umwälzkreislaufs weist dieser vorzugsweise eine Bypassleitung auf, wobei der Bypassleitungseinlass in Durchflussrichtung hinter der Fördereinrichtung des Umwälzkreislaufs angeordnet ist und der Bypassauslass in Durchflussrichtung vor der Fördereinrichtung des Umwälzkreislaufs angeordnet ist. Die Bypassleitung kann zum Reinigen und/oder Entleeren des Umwälzkreislaufs eingesetzt werden.

Weitere Einzelheiten der Erfindung sind der Figurenbeschreibung und den Zeichnungen zu entnehmen. Es zeigen
- Fig. 1: ein Ausführungsbeispiel des erfindungsgemäßen Wirkstoffversorgungssystems in einer schematischen Darstellung; und
- Fig. 2: ein weiteres Ausführungsbeispiel des erfindungsgemäßen Wirkstoffversorgungssystems in einer schematischen Darstellung.

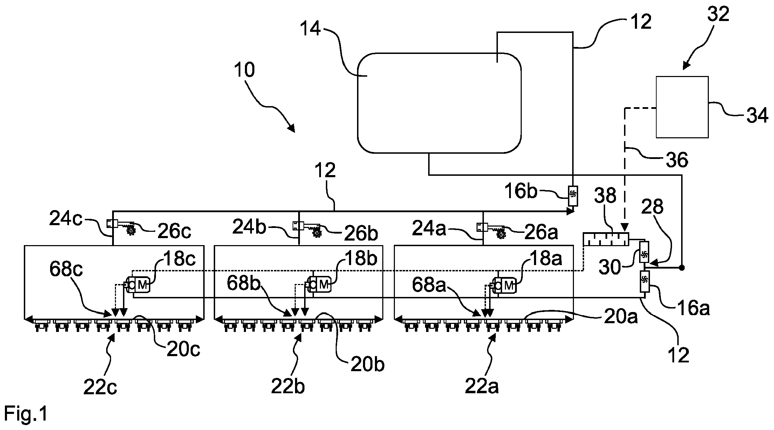

Die Fig. 1 zeigt ein Wirkstoffversorgungssystem 10 für ein landwirtschaftliches Spritzgerät. Das Wirkstoffversorgungssystem 10 umfasst einen Hauptflüssigkeitskreislauf 12, innerhalb welchem eine Hauptflüssigkeit, wie etwa Wasser oder eine vorgemischte Spritzbrühe, zirkuliert.

Der Hauptflüssigkeitskreislauf 12 umfasst einen Vorratsbehälter 14 für die Hauptflüssigkeit, zwei Durchflussmesseinrichtungen 16a, 16b, mehrere Durchflusssteuereinheiten 18a-18c und mehrere Verteilabschnitte 20a-20c. Die Durchflussmesseinrichtung 16a ist zwischen einer Abzweigung 28 und den Verteilabschnitten 20a-20c angeordnet. Die Durchflussmesseinrichtung 16b ist zwischen den Rückflussleitungen 24a-24c und dem Vorratsbehälter 14 angeordnet. Die mehreren Durchflusssteuereinheiten 18a-18c sind jeweils mit dem Hauptflüssigkeitskreislauf 12 und einem Einspeisesystem 32 verbunden steuern den Durchfluss der Hauptflüssigkeit und einer Wirkstoffmischung zu den Verteilabschnitten 20a-20c. Die Wirkstoffmischung und die Hauptflüssigkeit kann an mehreren Stellen 68a-68c in die Verteilabschnitte 20a-20c eingeleitet werden. Die Durchflusssteuereinheiten 18a-18c sind als 3-Wege-Kugelhähne ausgebildet. Die Verteilabschnitte 20a-20c verteilen jeweils die auszubringende Spritzflüssigkeit auf mehrere Ausbringelemente 22a-22c

Der Hauptflüssigkeitskreislauf 12 weist in Durchflussrichtung hinter den Verteilabschnitten 20a-20c die Rückflussleitungen 24a-24c auf, welche mit dem Vorratsbehälter 14 verbunden sind. An den jeweiligen Rückflussleitungen 24a-24c ist jeweils eine als 2-Wege-Kugelhahn ausgebildete Absperreinrichtung 26a-26c angeordnet, mittels welchen der Durchfluss gesperrt werden kann. Zwischen den Rückflussleitungen 24a-24c und dem Vorratsbehälter 14 ist außerdem eine Sammelleitung angeordnet.

An dem Hauptflüssigkeitskreislauf 12 ist ferner die Abzweigung 28 vorhanden, welche den Hauptflüssigkeitskreislauf 12 fluidleitend mit einer Mischkammer 38 des Einspeisesystems 32 verbindet. Zwischen der Abzweigung 28 und der Mischkammer 38 ist eine Durchflussmesseinrichtung 30 angeordnet. In der Mischkammer 38 des Einspeisesystems 32 wird die Hauptflüssigkeit mit Wirkstoff zu einer flüssigen Wirkstoffmischung vermischt. Der Wirkstoff wird über die Dosierpumpe 34 und die Leitung 36 der Mischkammer 38 zugeführt.

Das dargestellte Wirkstoffversorgungssystem 10 kann beispielsweise in einem landwirtschaftlichen Spritzgerät eingesetzt werden, welches ein Verteilergestänge aufweist, an welchem die Ausbringelemente 22a-22c angeordnet sind.

Während des Ausbringens der Spritzflüssigkeit zirkuliert die Hauptflüssigkeit in dem Hauptflüssigkeitskreislauf 12 des Wirkstoffversorgungssystems 10. Die Hauptflüssigkeit wird durch das Einspeisesystem 32 mit dem Wirkstoff zu einer flüssigen Wirkstoffmischung vermischt und die Wirkstoffmischung wird an mehreren Stellen 68a-68c in die Verteilabschnitte 20a-20c eingeleitet. Innerhalb der Verteilabschnitte 20a-20c verteilt sich die Wirkstoffmischung auf die Ausbringelemente 22a-22c, welche die Wirkstoffmischung als Spritzflüssigkeit letztendlich auf eine landwirtschaftliche Nutzfläche abgeben. Der Durchfluss der Hauptflüssigkeit und der Wirkstoffmischung zu den Verteilabschnitten 20a-20c wird mit den Durchflusssteuereinheiten 18a-18c geregelt.

Ferner können die Verteilabschnitte 20a-20c vor dem Freigeben von deren Ausbringelementen 22a-22c mit der Wirkstoffmischung vorgeladen werden. Das Vorladen erfolgt dadurch, dass die Absperreinrichtungen 26a-26c an den Rückflussleitungen 24a-24c geöffnet bleiben und die Durchflusssteuereinheiten 18a-18c den Verteilabschnitten 20a-20c Wirkstoffmischung zuführen, bis an den Ausbringelementen 22a-22c der Verteilabschnitte 20a-20c die Wirkstoffmischung ansteht.

Beim Ändern der auszubringenden Spritzflüssigkeit von der Wirkstoffmischung auf reine Hauptflüssigkeit bleiben die Absperreinrichtungen 26a-26c an den Rückflussleitungen 24a-24c solange geschlossen, bis sämtliche Wirkstoffmischung die Leitungen des Hauptflüssigkeitskreislaufs 12 verlassen hat.

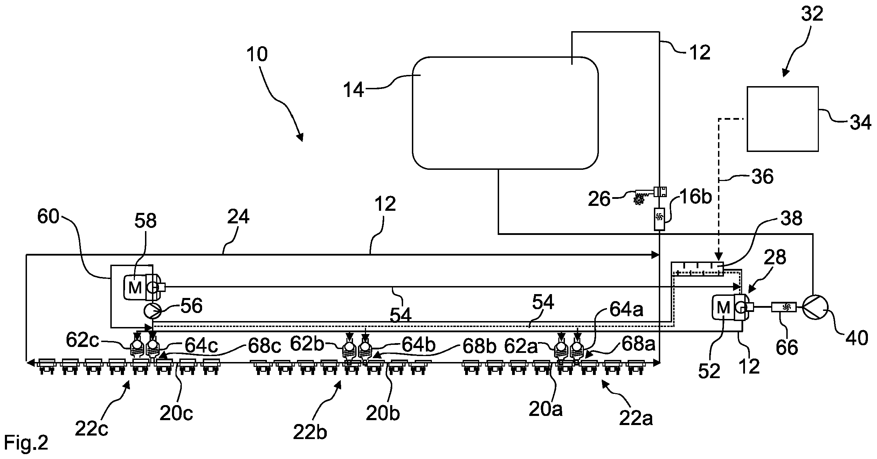

Die Fig. 2 zeigt ein Wirkstoffversorgungssystem 10 mit einem Hauptflüssigkeitskreislauf 12 und einem Umwälzkreislauf 54.

Der Hauptflüssigkeitskreislauf 12 weist in Durchflussrichtung hinter den Verteilabschnitten 20a-20c eine Rückflussleitung 24 auf, welche mit dem Vorratsbehälter 14 verbunden ist, wobei an der Rückflussleitung 24 eine Absperreinrichtung 26 angeordnet ist, welche dazu eingerichtet ist, den Durchfluss zu sperren. Die Absperreinrichtung 26 ist als 2-Wege-Kugelhahn ausgebildet.

An dem Hauptflüssigkeitskreislauf 12 ist wieder eine Abzweigung 28 vorhanden, welche den Hauptflüssigkeitskreislauf 12 fluidleitend mit einer Mischkammer 38 eines Einspeisesystems 32 verbindet. Die Abzweigung 28 weist in dieser Ausführungsform eine Durchflusssteuereinheit 52 auf, welche dazu eingerichtet ist, den Durchfluss der in dem Hauptflüssigkeitskreislauf 12 zirkulierenden Hauptflüssigkeit und den Abfluss der in dem Hauptflüssigkeitskreislauf 12 zirkulierenden Hauptflüssigkeit zu der Mischkammer 38 zu steuern. Die Durchflusssteuereinheit 52 ist ein 3-Wege-Kugelhahn, welcher entweder die Zirkulation der Hauptflüssigkeit im Hauptflüssigkeitskreislauf 12 erlaubt oder alternativ die Hauptflüssigkeit aus dem Hauptflüssigkeitskreislauf 12 zu der Mischkammer 38 umleitet. Außerdem ist zwischen einer Fördereinrichtung 40 des Hauptflüssigkeitskreislaufs 12 und der Durchflusssteuereinheit 52 der Abzweigung 28 eine Durchflussmesseinrichtung 66 angeordnet.

Außerdem weist der Hauptflüssigkeitskreislauf 12 mehrere Durchflusssteuereinheiten 62a-62c auf, welche jeweils den Durchfluss der Hauptflüssigkeit zu einem Verteilabschnitt 20a-20c steuern.

Der Umwälzkreislauf 54 erlaubt die Zirkulation der Wirkstoffmischung. Durch den Umwälzkreislauf 54 steht an den Durchflusssteuereinheiten 64a-64c, welche jeweils mit dem Einspeisesystem 32 verbunden sind, eine Wirkstoffmischung mit dem gewünschten Mischungsverhältnis an. Die Durchflusssteuereinheiten 64a-64c steuern jeweils den Durchfluss der Wirkstoffmischung zu einem Verteilabschnitt 20a-20c. Der Umwälzkreislauf 54 ist gegenüber dem Vorratsbehälter 14 und den Verteilabschnitten 20a-20c absperrbar. Ferner sind der Umwälzkreislauf 54 und der Hauptflüssigkeitskreislauf 12 vollständig voneinander trennbar. Damit eine Zirkulation trotzdem aufrecht erhalten werden kann, umfassen der Umwälzkreislauf 54 und der Hauptflüssigkeitskreislauf 12 jeweils eine eigene Fördereinrichtung 40, 56, welche jeweils als Pumpe ausgebildet sind.

Der Umwälzkreislauf 54 weist außerdem eine die Fördereinrichtung 56 überbrückende Bypassleitung 60 auf. Der Bypassleitungseinlass ist in Durchflussrichtung hinter der Fördereinrichtung 56 angeordnet und der Bypassleitungsauslass ist in Durchflussrichtung vor der Fördereinrichtung 56 angeordnet. Die Einbindung der Bypassleitung 60 wird über die Durchflusssteuereinheit 58 gesteuert, welche als 3-Wege-Kugelhahn ausgebildet ist. Die Bypassleitung 60 dient der Reinigung und Entleerung des Umwälzkreislaufs 54.

Das dargestellte Wirkstoffversorgungssystem kann ebenso in einem landwirtschaftlichen Spritzgerät eingesetzt werden, welches ein Verteilergestänge aufweist, an welchem die Ausbringelemente 22a-22c angeordnet sind.

### Bezugszeichenliste

- 10: Wirkstoffversorgungssystem
- 12: Hauptflüssigkeitskreislauf
- 14: Vorratsbehälter
- 16a, 16b: Durchflussmesseinrichtungen
- 18a-18c: Durchflusssteuereinheiten
- 20a-20c: Verteilabschnitte
- 22a-22c: Gruppen von Ausbringelementen
- 24, 24a-24c: Rückflussleitungen
- 26, 26a-26c: Absperreinrichtungen
- 28: Abzweigung
- 30: Durchflussmesseinrichtung
- 32: Einspeisesystem
- 34: Dosierpumpe
- 36: Leitung
- 38: Mischkammer
- 40: Fördereinrichtung
- 52: Durchflusssteuereinheit
- 54: Umwälzkreislauf
- 56: Fördereinrichtung
- 58: Durchflusssteuereinheit
- 60: Bypassleitung
- 62a-62c: Durchflusssteuereinheiten
- 64a-64c: Durchflusssteuereinheiten
- 66: Durchflussmesseinrichtung
- 68a-68c: Einleitstellen

## Patentansprüche

1. Wirkstoffversorgungssystem (10) für ein landwirtschaftliches Spritzgerät, mit
- einem Hauptflüssigkeitskreislauf (12), welcher einen Vorratsbehälter (14) für eine Hauptflüssigkeit umfasst und eine Zirkulation der Hauptflüssigkeit erlaubt, wobei der Hauptflüssigkeitskreislauf (12) einen oder mehrere Verteilabschnitte (20a-20c) umfasst, welche jeweils dazu eingerichtet sind, eine auszubringende Spritzflüssigkeit auf mehrere Ausbringelemente (22a-22c) zu verteilen, und
- einem Einspeisesystem (32), welches mit dem Hauptflüssigkeitskreislauf (12) verbunden ist und in welchem die Hauptflüssigkeit mit zumindest einem separat eingespeisten Wirkstoff zu einer flüssigen Wirkstoffmischung vermischt wird;
wobei das Wirkstoffversorgungssystem (10) dazu eingerichtet ist, die Wirkstoffmischung an mehreren Stellen (68a-68c) in den einen oder die mehreren Verteilabschnitte (20a-20c) einzuleiten,
**dadurch gekennzeichnet, dass** an dem Hauptflüssigkeitskreislauf eine Abzweigung (28) vorhanden ist, welche den Hauptflüssigkeitskreislauf fluidleitend mit einer Mischkammer (38) des Einspeisesystems verbindet.

2. Wirkstoffversorgungssystem (10) nach Anspruch 1,
**gekennzeichnet durch** mehrere Durchflusssteuereinheiten (18a-18c), welche jeweils mit dem Hauptflüssigkeitskreislauf (12) und dem Einspeisesystem (32) verbunden und dazu eingerichtet sind, den Durchfluss der Hauptflüssigkeit und der Wirkstoffmischung zu einem Verteilabschnitt (20a-20c) zu steuern.

3. Wirkstoffversorgungssystem (10) nach Anspruch 1 oder 2,
**dadurch gekennzeichnet, dass** der Hauptflüssigkeitskreislauf (12) in Durchflussrichtung hinter dem einen oder den mehreren Verteilabschnitten (20a-20c) eine oder mehrere Rückflussleitungen (24, 24a-24c) aufweist, welche mit dem Vorratsbehälter (14) verbunden sind, wobei an der einen oder an den mehreren Rückflussleitungen (24, 24a-24c) jeweils eine Absperreinrichtung (26, 26a-26c) angeordnet ist, welche dazu eingerichtet ist, den Durchfluss zu sperren.

4. Wirkstoffversorgungssystem (10) nach Anspruch 1,
**dadurch gekennzeichnet, dass** die Abzweigung (28) eine Durchflusssteuereinheit (52) aufweist, welche dazu eingerichtet ist, den Durchfluss der in dem Hauptflüssigkeitskreislauf (12) zirkulierenden Hauptflüssigkeit und/oder den Abfluss der in dem Hauptflüssigkeitskreislauf (12) zirkulierenden Hauptflüssigkeit zu der Mischkammer (38) zu steuern.

5. Wirkstoffversorgungssystem (10) nach einem der vorstehenden Ansprüche,
**gekennzeichnet durch** mehrere Durchflusssteuereinheiten (62a-62c), deren Einlässe jeweils mit dem Hauptflüssigkeitskreislauf (12) und vorzugsweise nicht mit dem Einspeisesystem (32) verbunden sind und welche jeweils dazu eingerichtet sind, den Durchfluss der Hauptflüssigkeit zu einem Verteilabschnitt (20a-20c) zu steuern.

6. Wirkstoffversorgungssystem (10) nach einem der vorstehenden Ansprüche,
**gekennzeichnet durch** mehrere Durchflusssteuereinheiten (64a-64c), deren Einlässe jeweils mit dem Einspeisesystem (32) und vorzugsweise nicht mit dem Hauptflüssigkeitskreislauf (12) verbunden sind und welche jeweils dazu eingerichtet sind, den Durchfluss der Wirkstoffmischung zu einem Verteilabschnitt (20a-20c) zu steuern.

7. Wirkstoffversorgungssystem (10) nach einem der vorstehenden Ansprüche, **gekennzeichnet durch** einen Umwälzkreislauf (54) für die Wirkstoffmischung, welcher eine Zirkulation der Wirkstoffmischung erlaubt.

8. Wirkstoffversorgungssystem (10) nach Anspruch 7,
**dadurch gekennzeichnet, dass** der Umwälzkreislauf (54) gegenüber dem Vorratsbehälter (14) und/oder dem einen oder den mehreren Verteilabschnitten (20a-20c) absperrbar ist.

9. Wirkstoffversorgungssystem (10) nach Anspruch 7 oder 8,
**dadurch gekennzeichnet, dass** der Umwälzkreislauf (54) und der Hauptflüssigkeitskreislauf (12) vollständig voneinander trennbar sind.

10. Wirkstoffversorgungssystem (10) nach einem der Ansprüche 7 bis 9,
**dadurch gekennzeichnet, dass** der Umwälzkreislauf (54) eine Fördereinrichtung (56) und eine die Fördereinrichtung (56) überbrückende Bypassleitung (60) aufweist.

11. Landwirtschaftliches Spritzgerät, mit
- einem Verteilergestänge, an welchem mehrere Ausbringelemente (22a-22c) angeordnet sind; und
- einem Wirkstoffversorgungssystem (10), welches den Ausbringelementen (22a-22c) eine auszubringende Spritzflüssigkeit bereitstellt;
**dadurch gekennzeichnet, dass** das Wirkstoffversorgungssystem (10) nach einem der vorstehenden Ansprüche ausgebildet ist.

12. Verfahren zum Ausbringen einer Spritzflüssigkeit mit einem landwirtschaftlichen Spritzgerät, insbesondere einem landwirtschaftlichen Spritzgerät nach dem vorstehenden Anspruch, mit den Schritten:
- Zirkulieren einer Hauptflüssigkeit in einem Hauptflüssigkeitskreislauf (12) eines Wirkstoffversorgungssystems (10) des Spritzgeräts, welcher einen Vorratsbehälter (14) für eine Hauptflüssigkeit umfasst
- Verteilen einer auszubringenden Spritzflüssigkeit auf mehrere Ausbringelemente (22a-22c) in einem oder mehreren Verteilabschnitten (20a-20c) des Hauptflüssigkeitskreislaufs (12),
- Vermischen von Hauptflüssigkeit mit einem Wirkstoff zu einer flüssigen Wirkstoffmischung in einem Einspeisesystem (32) des Wirkstoffversorgungssystems (10) des Spritzgeräts; und
- Einleiten der Wirkstoffmischung an mehreren Stellen (68a-68c) in den einen oder die mehreren Verteilabschnitte (20a-20c),
**dadurch gekennzeichnet, dass** die Vermischung der Hauptflüssigkeit mit dem Wirkstoff zur flüssigen Wirkstoffmischung in einer Mischkammer (38) des Einspeisesystems erfolgt, die über eine Abzweigung (28) fluidleitend mit dem Hauptflüssigkeitskreislauf verbunden ist.

13. Verfahren nach Anspruch 12,
**gekennzeichnet durch** den Schritt:
- Steuern des Durchflusses der Hauptflüssigkeit und der Wirkstoffmischung zu einem Verteilabschnitt (20a-20c) an den mehreren Stellen (68a-68c).

14. Verfahren nach Anspruch 13,
**dadurch gekennzeichnet, dass** das Steuern des Durchflusses der Hauptflüssigkeit und der Wirkstoffmischung zu einem Verteilabschnitt (20a-20c) an den mehreren Stellen (68a-68c) jeweils mit einer Umschalteinheit, insbesondere einem Stellventil, erfolgt, welche entweder den Durchfluss der Hauptflüssigkeit oder alternativ den Durchfluss der Wirkstoffmischung zu einem Verteilabschnitt (20a-20c) freigibt.

15. Verfahren nach Anspruch 13,
**dadurch gekennzeichnet, dass** das Steuern des Durchflusses der Hauptflüssigkeit und der Wirkstoffmischung zu einem Verteilabschnitt (20a-20c) an den mehreren Stellen (68a-68c) jeweils mit separaten Ventilen für die Hauptflüssigkeit und die flüssige Wirkstoffmischung erfolgt.

16. Verfahren nach einem der Ansprüche 12 bis 15,
**gekennzeichnet durch** zumindest einen der folgenden Schritte:
- Sperren des Rückflusses des Hauptflüssigkeitskreislaufs (12) von dem einen oder den mehreren Verteilabschnitten (20a-20c) zu dem Vorratsbehälter (14);
- Freigeben des Rückflusses des Hauptflüssigkeitskreislaufs (12) von dem einen oder den mehreren Verteilabschnitten (20a-20c) zu dem Vorratsbehälter (14).

17. Verfahren nach einem der Ansprüche 12 bis 16,
**gekennzeichnet durch** den Schritt:
- Zirkulieren der Wirkstoffmischung in einem Umwälzkreislauf (54).

18. Verfahren nach einem der Ansprüche 12 bis 17,
**gekennzeichnet durch** den Schritt:
- Vorladen eines Verteilabschnitts (20a-20c), mehrerer oder sämtlicher Verteilabschnitte (20a-20c) mit der Wirkstoffmischung vor einem Freigeben von deren Ausbringelemente (22a-22c).

19. Verfahren nach einem der Ansprüche 12 bis 18,
**gekennzeichnet durch** den Schritt:
- Vorladen des Umwälzkreislaufs (54) mit der Wirkstoffmischung vor einem Freigeben des
Durchflusses von dem Umwälzkreislauf (54) zu einem oder mehreren Verteilabschnitten (20a-20c).

20. Verfahren nach einem der Ansprüche 12 bis 19,
**gekennzeichnet durch** den Schritt:
- Ändern der auszubringenden Spritzflüssigkeit von der Wirkstoffmischung auf reine Hauptflüssigkeit,
wobei zum Ändern der auszubringenden Spritzflüssigkeit von der Wirkstoffmischung auf reine Hauptflüssigkeit die eine oder die mehreren Absperreinrichtungen (26, 26a-26c) an den Rückflussleitungen (24, 24a-24c) solange geschlossen bleiben bis sämtliche Wirkstoffmischung die Leitungen des Hauptflüssigkeitskreislaufs (12) verlassen hat.

## Claims

1. A system (10) for the supply of an active substance for an agricultural sprayer, comprising
- a main liquid circuit (12), which comprises a reservoir (14) for a main liquid and allows circulation of the main liquid, the main liquid circuit (12) comprising one or more distribution sections (20a-20c), each configured to distribute a spray liquid to be dispensed to a plurality of dispensing elements (22a-22c), and
- a feed system (32) which is connected to the main liquid circuit (12) and in which the main liquid is mixed with at least one separately fed active substance to form a liquid active substance mixture;
the system (10) for the supply of an active substance being configured to introduce the active substance mixture into the one or the plurality of distribution sections (20a-20c) at a plurality of points (68a-68c),
**characterized in that** a branch (28) is present at the main liquid circuit and connects the main liquid circuit to a mixing chamber (38) of the feed system in a fluid-conducting manner.

2. The system (10) for the supply of an active substance according to claim 1,
**characterized by** a plurality of flow control units (18a-18c), each connected to the main liquid circuit (12) and the feed system (32) and configured to control the flow of the main liquid and the active substance mixture to a distribution section (20a-20c).

3. The system (10) for the supply of an active substance according to claim 1 or 2,
**characterized in that** the main liquid circuit (12) has, in the flow direction past the one or the plurality of distribution sections (20a-20c), one or more return lines (24, 24a-24c), which are connected to the reservoir (14), wherein a shutoff device (26, 26a-26c) is arranged on the one or on each of the plurality of return lines (24, 24a-24c), said shutoff device being configured to block the flow.

4. The system (10) for the supply of an active substance according to claim 1,
**characterized in that** the branch (28) has a flow control unit (52), which is configured to control the flow of the main liquid circulating in the main liquid circuit (12) and/or the outflow of the main liquid circulating in the main liquid circuit (12) to the mixing chamber (38).

5. The system (10) for the supply of an active substance according to any of the preceding claims,
**characterized by** a plurality of flow control units (62a-62c), the inlets of which are each connected to the main liquid circuit (12) and preferably not to the feed system (32) and which are each configured to control the flow of the main liquid to a distribution section (20a-20c).

6. The system (10) for the supply of an active substance according to any of the preceding claims,
**characterized by** a plurality of flow control units (64a-64c), the inlets of which are each connected to the feed system (32) and preferably not to the main liquid circuit (12) and which are each configured to control the flow of the active substance mixture to a distribution section (20a-20c).

7. The system (10) for the supply of an active substance according to any of the preceding claims,
**characterized by** a recirculation circuit (54) for the active substance mixture which allows circulation of the active substance mixture.

8. The system (10) for the supply of an active substance according to claim 7,
**characterized in that** the recirculation circuit (54) can be shut off with respect to the reservoir (14) and/or the one or the plurality of distribution sections (20a-20c).

9. The system (10) for the supply of an active substance according to claim 7 or 8,
**characterized in that** the recirculation circuit (54) and the main liquid circuit (12) can be completely disconnected from each other.

10. The system (10) for the supply of an active substance according to any of claims 7 to 9,
**characterized in that** the recirculation circuit (54) has a conveying device (56) and a bypass line (60) which bypasses the conveying device (56).

11. An agricultural sprayer, comprising
- a distributor rod assembly on which a plurality of dispensing elements (22a-22c) are arranged; and
- a system (10) for the supply of an active substance which provides to the dispensing elements (22a-22c) a spray liquid to be dispensed;
**characterized in that** the system (10) for the supply of an active substance is designed according to any of the preceding claims.

12. A method for dispensing a spray liquid using an agricultural sprayer, especially an agricultural sprayer according to the preceding claim, comprising the following steps:
- circulating a main liquid in a main liquid circuit (12) of a system (10) for the supply of an active substance of the sprayer, which comprises a reservoir (14) for a main liquid
- distributing a spray liquid to be dispensed to a plurality of dispensing elements (22a-22c) in one or more distribution sections (20a-20c) of the main liquid circuit (12),
- mixing main liquid with an active substance to form a liquid active substance mixture in a feed system (32) of the system (10) for the supply of an active substance of the sprayer; and
- introducing the active substance mixture into the one or the plurality of distribution sections (20a-20c) at a plurality of points (68a-68c),
**characterized in that** the main liquid is mixed with the active substance in a mixing chamber (38) of the feed system to form the liquid active substance mixture, which chamber is connected via a branch (28) in a fluid-conducting manner to the main liquid circuit.

13. The method according to claim 12,
**characterized by** the step of:
- controlling the flow of the main liquid and the active substance mixture to a distribution section (20a-20c) at the plurality of points (68a-68c).

14. The method according to claim 13,
**characterized in that** the control of the flow of the main liquid and the active substance mixture to a distribution section (20a-20c) at the plurality of points (68a-68c) is carried out in each case with a switching unit, in particular a control valve, which releases either the flow of the main liquid or, alternatively, the flow of the active substance mixture to a distribution section (20a-20c).

15. The method according to claim 13,
**characterized in that** the control of the flow of the main liquid and the active substance mixture to a distribution section (20a-20c) at the plurality of points (68a-68c) is carried out in each case with separate valves for the main liquid and the liquid active substance mixture.

16. The method according to any of claims 12 to 15,
**characterized by** at least one of the following steps:
- blocking the return flow of the main liquid circuit (12) from the one or the plurality of distribution sections (20a-20c) to the reservoir (14);
- releasing the return flow of the main liquid circuit (12) from the one or the plurality of distribution sections (20a-20c) to the reservoir (14).

17. The method according to any of claims 12 to 16,
**characterized by** the step of:
- circulating the active substance mixture in a recirculation circuit (54).

18. The method according to any of claims 12 to 17,
**characterized by** the step of:
- pre-loading a distribution section (20a-20c), a plurality of or all distribution sections (20a-20c) with the active substance mixture before releasing the dispensing elements thereof (22a-22c).

19. The method according to any of claims 12 to 18,
**characterized by** the step of:
- pre-loading the recirculation circuit (54) with the active substance mixture prior to releasing the flow from the recirculation circuit (54) to one or more distribution sections (20a-20c).

20. The method according to any of claims 12 to 19,
**characterized by** the step of:
- changing the spray liquid to be dispensed from the active substance mixture to pure main liquid,
wherein, to change the spray liquid to be dispensed from the active substance mixture to pure main liquid, the one or the plurality of shutoff devices (26, 26a-26c) on the return lines (24, 24a-24c) remain closed until all the active substance mixture has left the lines of the main liquid circuit (12).

## Revendications

1. Système d'alimentation d'une substance active (10) pour un pulvérisateur agricole, comportant
- un circuit de liquide principal (12), qui comprend un réservoir de stockage (14) destiné à un liquide principal et permet une circulation du liquide principal, le circuit de liquide principal (12) comprenant une ou plusieurs parties de distribution (20a-20c), qui sont respectivement conçues pour distribuer un liquide de pulvérisation à épandre sur plusieurs éléments d'épandage (22a-22c) et
- un système d'introduction (32), qui est relié au circuit de liquide principal (12) et dans lequel le liquide principal est mélangé avec au moins une substance active introduite séparément pour obtenir un mélange de substance active liquide ;
le système d'alimentation de substance active (10) étant conçu pour faire entrer le mélange de substance active en plusieurs endroits (68a-68c) dans la ou les plusieurs parties de distribution (20a-20c),
**caractérisé en ce qu'**une bifurcation (28) se trouve sur le circuit de liquide principal, laquelle relie, par liaison conductrice de fluide, le circuit de liquide principal à une chambre de mélange (38) du système d'introduction.

2. Système d'alimentation de substance active (10) selon la revendication 1,
**caractérisé par** plusieurs unités de commande de débit (18a-18c), qui sont respectivement reliées au circuit de liquide principal (12) et au système d'introduction (32) et qui sont conçues pour commander le débit du liquide principal et du mélange de substance active vers une partie de distribution (20a-20c).

3. Système d'alimentation de substance active (10) selon la revendication 1 ou 2,
**caractérisé en ce que** le circuit de liquide principal (12) présente, derrière la ou les plusieurs parties de distribution (20a-20c) dans la direction du débit, une ou plusieurs conduites de retour (24, 24a-24c), qui sont reliées au réservoir de stockage (14), un dispositif d'arrêt (26, 26a-26c) étant disposé respectivement sur la ou les plusieurs conduites de retour (24, 24a-24c), lequel est conçu pour bloquer le débit.

4. Système d'alimentation de substance active (10) selon la revendication 1,
**caractérisé en ce que** la bifurcation (28) présente une unité de commande de débit (52), qui est conçue pour commander le débit du liquide principal circulant dans le circuit de liquide principal (12) et/ou l'écoulement du liquide principal circulant dans le circuit de liquide principal (12) vers la chambre de mélange (38).

5. Système d'alimentation de substance active (10) selon l'une quelconque des revendications précédentes,
**caractérisé par** plusieurs unités de commande de débit (62a-62c), dont les entrées sont respectivement reliées au circuit de liquide principal (12) et de préférence pas au système d'introduction (32) et qui sont respectivement conçues pour commander le débit du liquide principal vers une partie de distribution (20a-20c).

6. Système d'alimentation de substance active (10) selon l'une quelconque des revendications précédentes,
**caractérisé par** plusieurs unités de commande de débit (64a-64c), dont les entrées sont respectivement reliées au système d'introduction (32) et de préférence pas au circuit de liquide principal (12) et qui sont respectivement conçues pour commander le débit du mélange de substance active vers une partie de distribution (20a-20c).

7. Système d'alimentation de substance active (10) selon l'une quelconque des revendications précédentes,
**caractérisé par** un circuit de circulation (54) pour le mélange de substance active, qui permet une circulation du mélange de substance active.

8. Système d'alimentation de substance active (10) selon la revendication 7,
**caractérisé en ce que** le circuit de circulation (54) peut être coupé par rapport au réservoir de stockage (14) et/ou à la ou aux plusieurs parties de distribution (20a-20c).

9. Système d'alimentation de substance active (10) selon la revendication 7 ou 8,
**caractérisé en ce que** le circuit de circulation (54) et le circuit de liquide principal (12) peuvent être totalement séparés l'un de l'autre.

10. Système d'alimentation de substance active (10) selon l'une quelconque des revendications 7 à 9,
**caractérisé en ce que** le circuit de circulation (54) présente un dispositif de refoulement (56) et une conduite de dérivation (60) contournant le dispositif de refoulement (56).

11. Pulvérisateur agricole, comportant
- une tringlerie de distribution, sur laquelle plusieurs éléments d'épandage (22a-22c) sont disposés ; et
- un système d'alimentation de substance active (10), qui fournit un liquide de pulvérisation à épandre aux éléments d'épandage (22a-22c) ;
**caractérisé en ce que** le système d'alimentation de substance active (10) est réalisé selon l'une quelconque des revendications précédentes.

12. Procédé d'épandage d'un liquide de pulvérisation au moyen d'un pulvérisateur agricole, en particulier un pulvérisateur agricole selon la revendication précédente, comprenant les étapes de :
- circulation d'un liquide principal dans un circuit de liquide principal (12) d'un système d'alimentation de substance active (10) du pulvérisateur, qui comprend un réservoir de stockage (14) destiné à un liquide principal
- distribution d'un liquide de pulvérisation à épandre sur plusieurs éléments d'épandage (22a-22c) dans une ou plusieurs parties de distribution (20a-20c) du circuit de liquide principal (12),
- mélange de liquide principal avec une substance active pour obtenir un mélange de substance active liquide dans un système d'introduction (32) du système d'alimentation de substance active (10) du pulvérisateur ; et
- entrée du mélange de substance active en plusieurs endroits (68a-68c) dans la ou les plusieurs parties de distribution (20a-20c),
**caractérisé en ce que** le mélange du liquide principal avec la substance active pour obtenir un mélange de substance active liquide est effectué dans une chambre de mélange (38) du système d'introduction, laquelle est reliée par liaison conductrice de fluide au circuit de liquide principal par le biais d'une bifurcation (28).

13. Procédé selon la revendication 12,
**caractérisé par** l'étape de :
- commande du débit du liquide principal et du mélange de substance active vers une partie de distribution (20a-20c) aux plusieurs endroits (68a-68c).

14. Procédé selon la revendication 13,
**caractérisé en ce que** la commande du débit du liquide principal et du mélange de substance active vers une partie de distribution (20a-20c) aux plusieurs endroits (68a-68c) est effectuée respectivement au moyen d'une unité de commutation, en particulier d'une soupape de réglage, qui libère soit le débit du liquide principal soit le débit du mélange de substance active vers une partie de distribution (20a-20c).

15. Procédé selon la revendication 13,
**caractérisé en ce que** la commande du débit du liquide principal et du mélange de substance active vers une partie de distribution (20a-20c) aux plusieurs endroits (68a-68c) est effectuée respectivement au moyen de soupapes séparées pour le liquide principal et le mélange de substance active liquide.

16. Procédé selon l'une quelconque des revendications 12 à 15,
**caractérisé par** au moins une des étapes suivantes :
- blocage du retour du circuit de liquide principal (12) de la ou des plusieurs parties de distribution (20a-20c) au réservoir de stockage (14) ;
- libération du retour du circuit de liquide principal (12) de la ou des plusieurs parties de distribution (20a-20c) au réservoir de stockage (14).

17. Procédé selon l'une quelconque des revendications 12 à 16,
**caractérisé par** l'étape de :
- circulation du mélange de substance active dans un circuit de circulation (54).

18. Procédé selon l'une quelconque des revendications 12 à 17,
**caractérisé par** l'étape de :
- préremplissage d'une partie de distribution (20a-20c), de plusieurs ou de toutes les parties de distribution (20a-20c) avec le mélange de substance active avant un déblocage de leurs éléments d'épandage (22a-22c).

19. Procédé selon l'une quelconque des revendications 12 à 18,
**caractérisé par** l'étape de :
- préremplissage du circuit de circulation (54) avec le mélange de substance active avant une libération du débit du circuit de circulation (54) à une ou plusieurs parties de distribution (20a-20c).

20. Procédé selon l'une quelconque des revendications 12 à 19,
**caractérisé par** l'étape de :
- modification du liquide de pulvérisation à épandre pour passer du mélange de substance active à du pur liquide principal,
dans lequel, pour modifier le liquide de pulvérisation à épandre pour passer du mélange de substance active à du pur liquide principal, le ou les plusieurs dispositifs d'arrêt (26, 26a-26c) sur les conduites de retour (24, 24a-24c) restent fermés jusqu'à ce que la totalité du mélange de substance active ait quitté les conduites du circuit de liquide principal (12).
